# EUROPEAN PATENT APPLICATION

(11) **EP 4 553 924 A1**
(43) Date of publication of application: **14.05.2025**
(21) Application number: 23835510.1
(22) Date of filing: 04.07.2023
(51) Int. Cl.: H01M 4/38, C01B 25/14, H01M 4/13, H01M 4/136, H01M 4/36, H01M 4/62

(54) **COMPOSITE POWDER, POSITIVE ELECTRODE MIX, AND ALKALI METAL ION BATTERY**

(30) Priority: 04.07.2022 JP 2022107642
(71) Applicant: Idemitsu Kosan Co.,Ltd., Tokyo 100-8321 (JP)
(72) Inventor: FUJII, Yuta, Tokyo 100-8321 (JP); HIGUCHI, Hiroyuki, Tokyo 100-8321 (JP); ISHIHARA, Yu, Tokyo 100-8321 (JP); HANIU, Yamato, Tokyo 100-8321 (JP)
(74) Representative: Vossius & Partner Patentanwälte Rechtsanwälte mbB
(86) International application number: PCT/JP2023/024704
(87) International publication number: WO 2024/009978

(57) **Abstract**

A composite powder including a carbon material having pores, a first heat-impregnating material and a second heat-impregnating material present in the pores, wherein the first heat-impregnating material includes an alkali metal ion-conductive material or precursor thereof including one or more elements selected from lithium, boron, oxygen, phosphorus, halogen and antimony, and the second heat-impregnating material includes an elemental sulfur.

## Description

### Technical Field

The present invention relates to a composite powder, a positive electrode mixture and an alkali metal-ion battery including the composite powder.

### Background Art

Alkali metal-ion batteries such as a lithium-ion battery and a sodium-ion battery are desired to have excellent battery capacities at high current density. As for the battery capacity, a method of using sulfur for a positive electrode has been studied because of its large theoretical capacity (for example, see Non-Patent Document 1). However, since sulfur has low electron conductivity, when sulfur is used for the positive electrode, it is required to ensure electron conductivity by some means.

In order to solve the above problems, a composite having sulfur and carbon material having pores has been studied (see, for example, Patent Document 1 and Non-Patent Document 2).

On the other hand, sulfur-carbon composite has a problem of small discharge capacity (low-rate properties) at high current density due to slow diffusion of alkali metal-ions in sulfur.

When a sulfur-carbon composite is used as a positive electrode of an all-solid-state lithium battery, it is disclosed that a solid electrolyte having a high lithium ionic conductivity is mechanically mixed with a sulfur-carbon composite, or it is combined using a solution in which solid electrolyte is dissolved to form a composite of carbon material, sulfur and solid electrolyte (see, for example, Patent Documents 2 to 4). However, lithium ionic conductivity in the pores is still low, and the discharge capacity (rate property) in a high current density is not sufficient.

### Related Art Documents

### Patent Documents

[Patent Document 1] JP 5856979 B2
[Patent Document 2] JP 2021-68663 A
[Patent Document 3] JP 2015-79622 A
[Patent Document 4] JP 2020-161288 A

### Non-Patent Documents

[Non-Patent Document 1] An All-solid-state Sodium-Sulfur Battery Operating at Room Temperature Using a High-sulfur-content Positive Composite Electrode, Chem. Lett. 2014, 43, 1333-1334.
[Non-Patent Document 2] A highly ordered nanostructured carbon-sulphur cathode for lithium-sulphur batteries, Nature Materials, 2009, 8, 500-506.

### Summary of the Invention

It is an object of the present invention to provide a composite powder capable of improving a discharge capacity (rate property) of an alkali metal-ion battery at a high current density.

According to the present invention, the following composite powder, etc. is provided.
1. A composite powder comprising a carbon material having pores, a first heat-impregnating material and a second heat-impregnating material present in the pores,
   wherein the first heat-impregnating material comprises an alkali metal ion-conductive material or precursor thereof comprising one or more elements selected from lithium, boron, oxygen, phosphorus, halogen and antimony, and
   the second heat-impregnating material comprises an elemental sulfur.
2. The composite powder according to 1, wherein the first heat-impregnating material has a melting point of 130 to 950°C.
3. The composite powder according to 1 or 2, wherein the first heat-impregnating material and the second heat-impregnating material are impregnated into the pores by melting.
4. The composite powder according to any one of 1 to 3, wherein the first heat-impregnating material is one or more compounds selected from the group consisting of phosphorus pentasulfide, red phosphorus, boron sulfide, lithium sulfide, lithium polysulfide (Li₂Sₙ, n satisfies 1<n≦8), lithium halide, lithium boron hydride, lithium oxide, phosphorus pentoxide, boron oxide, trilithium phosphate and antimony sulfide.
5. The composite powder according to any one of 1 to 4, wherein the BET specific surface area of the carbon material is 50 m²/g or more and 6,000 m²/g or less.
6. The composite powder according to any one of 1 to 5, wherein the pore volume of the carbon material is 0.5 cm³/g or more and 6 cm³/g or less.
7. A positive electrode mixture comprising the composite powder according to any one of 1 to 6, and a solid electrolyte.
8. An alkali metal-ion battery comprising the composite powder according to any one of 1 to 6.
9. A method for producing a composite powder, wherein the following steps (1) and (2) are conducted simultaneously or separately:
   step (1): heating a carbon material having pores, and an alkali metal ion-conductive material or a precursor thereof comprising one or more elements selected from lithium, boron, oxygen, phosphorus, halogen and antimony at a temperature equal to or higher than the melting point,
   step (2): heating the carbon material and an elemental sulfur at a temperature equal to or higher than the melting point of the elemental sulfur.
10. The method for producing it according to 9, wherein the alkali metal ion-conductive material or precursor thereof has a melting point of 130 to 950°C.
11. The method for producing it according to 9 or 10, wherein the step (2) is conducted after the step (1).

According to the present invention, it is possible to provide a composite powder capable of improving a discharge capacity (rate property) of an alkali metal-ion battery at a high current density.

### Brief Description of the Drawings

Fig. 1 is a diagram illustrating SEM image and EDX mapping of the cross-section of the composite powder A (carbon element (C), phosphorus element (P) and sulfur element (S)).
Fig. 2A is a diagram illustrating charge and discharge curves of the batteries produced in Example 1 and Comparative Examples 1 and 2 at a second cycle (current density at discharge: 0.187 mAcm⁻², at charge: 0.187 mAcm⁻²).
Fig. 2B is a diagram illustrating charge and discharge curves of the batteries produced in Example 1 and Comparative Examples 1 and 2 at the eighth cycle (current density at discharge: 7.46 mAcm⁻², at charge: 0.373 mAcm⁻²).
Fig. 3 is a diagram illustrating rate characteristics of batteries produced in Examples 1 and Comparative Examples 1 and 2.
Fig. 4 is a diagram illustrating cycle characteristics of batteries produced in Examples 1 and Comparative Examples 1 and 2.
Fig. 5A is a diagram illustrating charge and discharge curves of the batteries produced in Examples 2 to 4 at a second cycle (current density at discharge: 0.187 mAcm⁻², at charge: 0.187 mAcm⁻²).
Fig. 5B is a diagram illustrating charge and discharge curves of the batteries produced in Examples 2 to 4 at the eighth cycle (current density at discharge: 7.46 mAcm⁻², at charge: 0.373 mAcm⁻²).
Fig. 6 is a diagram illustrating rate characteristics of batteries produced in Examples 2 to 4.
Fig. 7 is a diagram illustrating cycle characteristics of batteries produced in Examples 2 to 4.
Fig. 8 is a diagram illustrating SEM image and EDX mapping of the cross-section of the composite powder G (carbon element (C) and iodine element (I)).
Fig. 9 is a diagram illustrating SEM image and EDX mapping of the cross-section of the composite powder I (carbon element (C) and antimony element (Sb)).
Fig. 10A is a diagram illustrating a charge and discharge curve of the battery produced in Example 5 at a second cycle (current density at discharge: 0.187 mAcm⁻², at charge: 0.187 mAcm⁻²).
Fig. 10B is a diagram illustrating a charge and discharge curve of the battery produced in Example 5 at the eighth cycle (current density at discharge: 7.46 mAcm⁻², at charge: 0.373 mAcm⁻²).
Fig. 11 is a diagram illustrating rate characteristics of the battery produced in Example 5.
Fig. 12 is a diagram illustrating cycle characteristics of the battery produced in Example 5.
Fig. 13 is a diagram illustrating SEM image and EDX mapping of the cross section of the composite powder K (carbon element (C) and bromine element (Br)).
Fig. 14 is a diagram illustrating SEM image and EDX mapping of the cross section of the composite powder M (carbon element (C) and phosphorus element (P)).

### Mode for Carrying out the Invention

A composite powder according to one embodiment includes a carbon material having pores, a first heat-impregnating material and a second heat-impregnating material present in the pores, wherein the first heat-impregnating material includes an alkali metal ion-conductive material or precursor thereof containing one or more elements selected from lithium, boron, oxygen, phosphorus, halogen and antimony, and the second heat-impregnating material includes an elemental sulfur.

In the present embodiment, the first heat-impregnating material and the second heat-impregnating material, which are melted by heating, are impregnated into the pores of the carbon material and filled into the pores. That is, they are impregnated into the pores by melting without using a solvent and without diluting the heat-impregnating material. As a result, the first heat-impregnating material and the second heat-impregnating material can be sufficiently contained in the pores, and the rate characteristics are improved.

On the other hand, there has been disclosed an impregnation method in which an alkali metal ion-conductive material such as solid electrolyte is dissolved in a solvent to form a solution, and the solution is filled in pores of a carbon material and then the alkali metal ion-conductive material is deposited (see, for example, Patent Document 4). In this impregnation method, since the impregnation material was diluted due to the use of solvents, and it was not possible to impregnate the pores with enough alkali metal ion-conductive material, it is considered that the rate-characteristics could not be greatly improved.

In addition, in the process of mechanically mixing solid electrolyte into the sulfur-carbon composite, since solid electrolyte does not enter the pores of the carbon material impregnated with sulfur, the conductive path of the alkali metal-ions cannot be formed, and the alkali metal ionic conductivity in the pores is caused only by the alkali metal-ion diffusions in the sulfur. As a result, it is considered that the rate characteristics could not be improved.

In the present embodiment, the first heat-impregnating material includes material having an alkali metal ionic conductivity containing one or more elements selected from lithium, boron, oxygen, phosphorus, halogen, and antimony, or precursor thereof.

In the present specification, "alkali metal ion-conductive material containing one or more elements selected from lithium, boron, oxygen, phosphorus, halogen, and antimony" is a material that maintains solids at 25°C in a nitrogenous atmosphere and has ionic conductivity attributable to alkali metal-ions. In addition, the term "a precursor of an alkali metal ion-conductive material containing one or more elements selected from lithium, boron, oxygen, phosphorus, halogen, and antimony" refers to a precursor that, when used as an active material of an alkali metal-ion battery, reacts with an alkali metal or an alkali metal-ion to form a compound containing an alkali metal, thereby forming the alkali metal ion-conductive material.

In the present specification, the above-described "alkali metal ion-conductive material" and "precursor of alkali metal ion-conductive material" may be simply referred to as "alkali metal ion-conductive material or precursor thereof".

In the present specification, "halogen" includes elements such as fluorine, chlorine, bromine, and iodine.

Since the first heat-impregnating material is a melt by heating, it preferably has a melting point of 130 to 950°C, and more preferably 220 to 950°C. Further, the melting point of the first heat-impregnating material, such as 850°C or less, 750°C or less, 650°C or less, 600°C or less, or 550°C or less, is preferably a lower temperature. Lowering the temperature in the process can reduce the energy at the time of production, leading to a cost reduction.

As the alkali metal ion-conductive material, when the alkali metal is lithium, example thereof include lithium sulfide, lithium polysulfide (Li₂Sₙ: n satisfies 1<n≦8), lithium halide (LiCl, LiBr, Lil, etc.), lithium boron hydride, lithium oxide, trilithium phosphate, lithium sulfate, lithium carbonate, LiBF₄, lithium tetraborate, organic lithium salt, lithium hydroxide, and the like. As the precursor of lithium ion-conductive material, examples thereof include phosphorus pentasulfide, red phosphorus, boron sulfide, phosphorus pentoxide, boron oxide, antimony sulfide, antimony, tin sulfide, tin, germanium sulfide, bismuth sulfide, and the like. These compounds may be used alone, or two or more of them may be used in combination.

When the alkali metal is sodium, examples thereof include sodium sulfide, sodium polysulfide, sodium halide (such as NaCl, NaBr, Nal), sodium boron hydride, sodium sulfate, sodium carbonate, NaBF₄, sodium tetraborate, organic sodium salt, and sodium hydroxide. Examples of the precursor of the sodium-ion conductive material include the same as those of the precursor of lithium ion-conductive material described above. These compounds may be used alone, or two or more of them may be used in combination.

As the organic lithium salt, examples thereof include lithium salt of bis(perfluoroalkylsulfonyl)imide such as lithium bis(trifluoromethanesulfonyl)imide, lithium bis(fluorosulfonyl)imide, lithium (fluorosulfonyl)(trifluoromethanesulfonyl)imide, lithium bis(pentafluoroethanesulfonyl)imide and lithium bis(nonafluorobutanesulfonyl)imide; lithium salt of perfluoroalkylsulfonimide such as lithium 4,4,5,5-tetrafluoro-1,3,2-dithiazolidine-1,1,3,3-tetraoxyde; lithium salt of fluorosulfonylimide; lithium carbonate such as trifluoromethanesulfonate, lithium acetate, lithium propionate and lithium butyrate; lithium organic sulfonate such as lithium dodecylbenzenesulfonate and p-styrenesulfonate; lithium organic phosphate; and the like.

These organic lithium salts are also preferably used for both ionic conductivity polymer and ionic liquids, and can be expected to impart high lithium conductivity.

Examples of the organic sodium salt include those obtained by replacing lithium-ion of the above-described organic lithium salt with a sodium ion.

The first heat-impregnating material is preferably one or more compounds selected from the group consisting of phosphorus pentasulfide, red phosphorus, boron sulfide, lithium sulfide, lithium polysulfide (Li₂Sₙ, n satisfies 1<n≦8), lithium halide, lithium boron hydride, lithium oxide, phosphorus pentoxide, boron oxide, trilithium phosphate and antimony sulfide.

Particularly preferable examples thereof include phosphorus pentasulfide or boron sulfide which is expected to react with lithium to form a sulfide solid electrolyte having high ionic conductivity, and lithium halide which is reported to be capable of forming a solid solution with lithium sulfide being a discharged product of sulfur to improve lithium ionic conductivity of lithium sulfide.

In the present embodiment, examples of the carbon material having pores include carbon black such as Ketjen black, acetylene black, Denka black, thermal black, channel black and Knobel (registered trademark); graphite; activated carbon; and the like. These may be used alone, or two or more thereof may be used in combination.

In one embodiment, the BET specific surface area of the carbon material is 50 m²/g or more and 6,000 m²/g or less. As a result, a wide interface between the carbon material and the elemental sulfur can be formed, and the utilization rate of the sulfur can be improved.

The BET specific surface area is preferably 70 m²/g or more, more preferably 100 m²/g or more, 1,000 m²/g or more, or 1,500 m²/g or more. Further, 5,500 m²/g or less is preferable, and 5,000 m²/g or less is more preferable.

The pore volume of the carbon material is 0.5 cm³/g or more and 6 cm³/g or less. Thus, a large amount of elemental sulfur can be impregnated into the pores of the carbon material together with the ion-conductive material or precursor thereof, and the capacity of the battery can be further improved.

The pore volume is preferably 0.7 cm³/g or more, and more preferably 1.0 cm³/g or more. It is preferably 5.5 cm³/g or less, and more preferably 5.0 cm³/g or less.

In the present invention, the BET specific surface area and the pore volume can be determined by using a nitrogen adsorption isotherm obtained by adsorbing nitrogen gas to carbon material at a liquid-nitrogen temperature. Specifically, the BET specific surface area can be calculated by Brenauer-Emmet-Telle (BET) multipoint method using a nitrogen-adsorption isotherm. The pore volume can be determined by Barret-Joyner-Halenda (BJH) method using a nitrogen-adsorption isotherm.

As the measuring device, for example, it can be measured using a specific surface area and pore distribution measuring device (Autosorb-3) manufactured by Quantacrome.

The composite powder of the present embodiment can be produced by heating a carbon material having pores, a first heat-impregnating material, and a second heat-impregnating material (hereinafter, the first heat-impregnating material and the second heat-impregnating material together may be simply referred to as a heat-impregnating material), at a temperature equal to or higher than the melting point of each heat-impregnating material.

Specifically, the carbon material, the first heat-impregnating material, and the second heat-impregnating material are mixed, and then they are heated to melt the first heat-impregnating material and the second heat-impregnating material, whereby the first heat-impregnating material and the second heat-impregnating material are impregnated into the pores of the carbon material. In the present embodiment, the first heat-impregnating material and the second heat-impregnating material can be impregnated into the carbon material at the same time. In addition, in one embodiment, the first heat-impregnating material and the second heat-impregnating material may be separately impregnated into the carbon material. For example, the first heat-impregnating material may be impregnated into the carbon material, and then the second heat-impregnating material may be impregnated thereinto.

The mixing ratio of the carbon material and the heat-impregnating material can be appropriately adjusted to the material to be used. Usually, the mixing ratio of carbon material [carbon material/(carbon material + first heat-impregnating material + second heat-impregnating material): mass ratio] is 0.073 to 0.990. Within this range, the pores of the carbon material are filled without insufficient heat-impregnating material. It is preferably from 0.077 to 0.950, more preferably from 0.081 to 0.905.

The mixture of the carbon material and the heat-impregnating material is heated at a temperature equal to or higher than the melting point of the heat-impregnating material. The heating temperature is adjusted to the heat-impregnating material used. A material having sublimability at atmospheric pressure can be heat-impregnated under pressure. The heating time is preferably 10 minutes to 24 hours.

By cooling after heating, a composite powder is obtained. If necessary, a grinding step may be performed after cooling.

In the present embodiment, it is preferable that the following steps (1) and (2) be conducted simultaneously or separately:
step (1): heating a carbon material having pores, and an alkali metal ion-conductive material or a precursor thereof containing one or more elements selected from lithium, boron, oxygen, phosphorus, halogen and antimony at a temperature equal to or higher than the melting point,
step (2): heating the carbon material and an elemental sulfur at a temperature equal to or higher than the melting point of the elemental sulfur.

In one embodiment, in the step (1), the alkali metal ion-conductive material or the precursor thereof having a melting point of 130 to 950°C is preferably heated at a temperature equal to or higher than the melting point.

In one embodiment, the step (2) is conducted after the step (1). This allows the pores of the carbon material to be impregnated with enough alkali metal ion-conducting material or precursor thereof without being affected by the melt of the elemental sulfur.

In the step (2), the mixing ratio of the carbon material [carbon material/(carbon material + elemental sulfur): mass ratio] is preferably 0.075 to 0.990. It is more preferably 0.078 to 0.951, and still more preferably 0.082 to 0.906.

When the alkali metal ion-conductive material containing one or more elements selected from lithium, boron, oxygen, phosphorus, halogen, and antimony or a precursor thereof and the elemental sulfur are simultaneously impregnated into the carbon material, the mixing ratio of the carbon material [carbon material/(carbon material + alkali metal ion-conductive material containing one or more elements selected from lithium, boron, oxygen, phosphorus, halogen, and antimony, or a precursor + elemental sulfur): mass ratio] is 0.073 to 0.990.

The heating temperature in the step (2) is equal to or higher than the melting point (about 115°C) of the elemental sulfur. The temperature is preferably 130°C or higher, and more preferably 150°C or higher.

The heating of the step (2) may be performed in two or more stages. For example, the heating temperature of the first stage may be equal to or higher than the melting point of the elemental sulfur and equal to or lower than the melting point of the alkali metal ion-conductive material or the precursor thereof, and the heating temperature of the second stage may be equal to or higher than the melting point of the alkali metal ion-conductive material or the precursor thereof. This makes it easier to impregnate the pores of the carbon material with enough elemental sulfur and alkali metal ion-conducting material or precursor thereof.

The composite powder of the present invention can be used as a material of an alkali metal-ion battery. The type of the alkali metal-ion battery is not limited, but may be, for example, a positive electrode made of a positive electrode mixture including a solid electrolyte and the composite powder.

The alkali metal-ion battery according to one embodiment of the present invention includes the above-described composite powder of the present invention. For example, an all-solid-state alkali metal-ion battery can be produced by using the solid electrolyte instead of a liquid-based electrolyte. By using the composite powder of the present invention, an all-solid-state alkali metal-ion battery having good rate characteristics can be produced. Hereinafter, an all-solid-state lithium-ion battery will be described as an exemplary all-solid-state alkali metal-ion battery.

The all-solid-state lithium-ion battery mainly includes a positive electrode layer, a negative electrode layer, and an electrolyte layer, but the composite powder of the present invention is suitable as a material of the positive electrode layer. The negative electrode layer and the electrolyte layer can be produced by a known method. In addition to the positive electrode layer, the negative electrode layer, and the electrolyte layer, a current collector is preferably used, and a known current collector is also used.

The solid electrolyte is not particularly limited, and examples thereof include a sulfide solid electrolyte.

The sulfide solid electrolyte is a solid electrolyte including at least sulfur atom and exhibiting ionic conductivity due to contained metallic ions, and a solid electrolyte including sulfur atom and preferably lithium atom and phosphorus atom, more preferably lithium atom, phosphorus atom and halogen atom, and having ionic conductivity due to lithium atom.

The sulfide solid electrolyte may be an amorphous sulfide solid electrolyte, or may be a crystalline sulfide solid electrolyte.

### (Amorphous sulfide solid electrolyte)

An amorphous sulfide solid electrolyte includes at least sulfur atom, and any one can be used therein without any particular limitation as long as it exhibits ionic conductivity caused by contained metal-ions, and typical examples thereof preferably include a solid electrolyte including sulfur atom, lithium atom and phosphorus atom, composed of lithium sulfide and phosphorus sulfide, such as Li₂S-P₂S₅; a solid electrolyte composed of lithium sulfide, phosphorus sulfide and lithium halide, such as Li₂S-P₂S₅-LiI, Li₂S-P₂S₅-LiCl, Li₂S-P₂S₅-LiBr and Li₂S-P₂S₅-LiI-LiBr; and a solid electrolyte further including other element such as oxygen element and silicon element, for example, such as Li₂S-P₂S₅-Li₂O-LiI and Li₂S-SiS₂-P₂S₅-LiI. From the viewpoint of obtaining higher ionic conductivity, a solid electrolyte composed of lithium sulfide, phosphorus sulfide and lithium halide, such as Li₂S-P₂S₅-LiI, Li₂S-P₂S₅-LiCl, Li₂S-P₂S₅-LiBr and Li₂S-P₂S₅-LiI-LiBr is preferable.

The type of the element constituting the amorphous sulfide solid electrolyte can be confirmed by, for example, an ICP emission spectrometer.

When the amorphous sulfide solid electrolyte has at least a Li₂S-P₂S₅, the molar ratio of Li₂S to P₂S₅ is preferably 65 to 85:15 to 35, more preferably 70 to 80:20 to 30, and still more preferably 72 to 78:22 to 28, from the viewpoint of obtaining higher ionic conductivity with high chemical stability.

When the amorphous sulfide solid electrolyte is, for example, Li₂S-P₂S₅-LiI-LiBr, the total amount of lithium sulfide and phosphorus pentasulfide is preferably 60 to 95 mol%, more preferably 65 to 90 mol%, and still more preferably 70 to 85 mol%. The amount of lithium bromide based on the total amount of lithium bromide and lithium iodide is preferably 1 to 99 mol%, more preferably 20 to 90 mol%, still more preferably 40 to 80 mol%, and particularly preferably 50 to 70 mol%.

In the amorphous sulfide solid electrolyte, when lithium atom, sulfur atom, phosphorus atom, and halogen atom are included, the blending ratio (molar ratio) of these atoms is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, and still more preferably 1.2 to 1.6:1.3 to 1.7:0.25 to 0.5:0.08 to 0.4.

Also, when bromine and iodine are used in combination as halogen atom, the blending ratio (molar ratio) of lithium atom, sulfur atom, phosphorus atom, bromine atom, and iodine atom is preferably 1.0 to 1.8:1.0 to 2.0:0.1 to 0.8:0.01 to 0.3:0.01 to 0.3, more preferably 1.1 to 1.7:1.2 to 1.8:0.2 to 0.6:0.02 to 0.25:0.02 to 0.25, still more preferably 1.2 to 1.6:1.3 to 1.7:0.25 to 0.5:0.03 to 0.2:0.03 to 0.2, and still more preferably 1.35 to 1.45:1.4 to 1.7:0.3 to 0.45:0.04 to 0.18:0.04 to 0.18. When the blending ratio (molar ratio) of lithium atom, sulfur atom, phosphorus atom, and halogen atom is within the above range, it is easy to obtain a solid electrolyte having a higher ionic conductivity having a thio-LISICON region II crystalline structure, which will be described later.

The form of the amorphous sulfide solid electrolyte is not particularly limited, and examples thereof include particulate forms. The average particle size (D₅₀) of the particulate amorphous sulfide solid electrolyte may be, for example, in the range of 0.01 µm to 500 µm, or 0.1 to 200 µm.

In the present specification, the average particle diameter (D₅₀) is a particle diameter that reaches 50% of the total by sequentially integrating the particles having the smallest particle diameter when the particle diameter distribution integrating curve is drawn, and the volume distribution is an average particle diameter that can be measured using, for example, a laser diffraction/scattering particle diameter distribution measuring device.

### (Crystalline sulfide solid electrolyte)

The crystalline sulfide solid electrolyte may be, for example, a so-called glass ceramic obtained by heating the amorphous sulfide solid electrolyte above to a crystallization temperature or higher, and a sulfide solid electrolyte having the following crystal structure may be employed.

Examples of the crystal structure that the crystalline sulfide solid electrolyte containing lithium atom, sulfur atom, and phosphorus atom may have include a Li₃PS₄ crystal structure, a Li₄P₂S₆ crystal structure, a Li₇PS₆ crystal structure, a Li₇P₃S₁₁ crystal structure, a crystal structure having peaks in the vicinity of 2θ=20.2° and in the vicinity of 23.6° (for example, JP-A-2013-16423).

Examples of the crystal structure that the crystalline sulfide solid electrolyte including lithium atom, sulfur atom, phosphorus atom, and halogen atom include a Li₄₋ₓGe₁₋ₓPₓS₄ thio-LISICON region II type crystal structure (see Kanno et al., Journal of The Electrochemical Society, 148 (7) A742-746 (2001)), a crystal structure similar to that of Li₄₋ₓGe₁₋ₓPₓS₄ thio-LISICON region II (see Solid State Ionics, 177 (2006), 2721-2725), and the like. Here, it is indicated that the "thio-LISICON region II type crystal structure" is any of a crystal structure Li₄₋ₓGe₁₋ₓPₓS₄ system thio-LISICON region II type crystal structure or a crystal structure similar to Li₄₋ₓGe₁₋ₓPₓS₄ system thio-LISICON region II type crystal structure.

In X-ray diffraction measurement using CuKα rays, diffraction peaks of Li₃PS₄ crystal structure appear, for example, around 2θ=17.5*, 18.3°, 26.1°, 27.3°, and 30.0°, diffraction peaks of Li₄P₂S₆ crystal structure appear, for example, around 2θ=16.9°, 27.1°, and 32.5°, diffraction peaks of Li₇PS₆ crystal structure appear, for example, around 2θ=15.3°, 25.2°, 29.6°, and 31.0°, diffraction peaks of Li₇P₃S₁₁ crystal structure appear, for example, around 2θ=17.8°, 18.5°, 19.7°, 21.8°, 23.7°, 25.9°, 29.6°, and 30.0°, diffraction peaks of Li₄₋ₓGe₁₋ₓPₓS₄ system thio-LISICON region II type crystal structure appear, for example, around 2θ=20.1°, 23.9°, and 29.5°, and diffraction peaks of the crystal structure similar to Li₄₋ₓGe₁₋ₓPₓS₄ system thio-LISICON region II type crystal structure appear, for example, around 2θ=20.2° and 23.6°. These peak positions may be varied within ±0.5°.

In addition, the crystalline structure of the crystalline sulfide solid electrolyte may be argyrodite-type crystal structure. Examples of argyrodite-type crystal structure include a Li₇PS₆ crystal structure; a crystal structure represented by the formula Li₇₋ₓP_{1-y}Si_{y}S₆ or Li₇₊ₓP_{1-y}Si_{y}S₆ (x is -0.6 to 0.6, y is 0.1 to 0.6) having a Li₇PS₆ structure skeleton; a crystal structure having Li_{7-x-2y}PS_{6-x-y}Clₓ (0.8≦x≦ 1.7, 0<y≦-0.25x+0.5); and a crystal structure having Li₇₋ₓPS₆₋ₓHaₓ (Ha is Cl or Br, and x is preferably 0.2 to 1.8).

Among the above crystal structures, the crystal structure of the crystalline sulfide solid electrolyte is preferably a Li₃PS₄ crystal structure, a thio-LISICON region II type crystal structure, and an argyrodite-type crystal structure.

The form of the crystalline sulfide solid electrolyte is not particularly limited, and examples thereof include particulate forms. The average particle size (D₅₀) of the particulate crystalline sulfide solid electrolyte may be, for example, in the range of 0.01 µm to 500 µm, or 0.1 to 200 µm, similar to the average particle size (D₅₀) of the amorphous sulfide solid electrolyte described above.

### Examples

The present invention is specifically described by way of Examples. The present invention is not limited to Examples.

### Example 1

### [Preparation of composite powder]

### (1) Preparation of composite powder A

An activated carbon (MSC-30, manufactured by Kansai Coke and Chemicals Company, Limited) and phosphorus pentasulfide (manufactured by Italmatch, melting point: 286 to 290°C) with the mass ratio of 68:32 were added to a Tammann tube with an inner diameter of 12 mm, and it was added and sealed in a SUS tube container. It was heated in an electric furnace from room temperature to 350°C over an hour, and then it was held for 6 hours at 350°C to obtain a composite powder A.

The average particle size D₅₀ of the activated carbon (MSC-30) used was 50 to 150 µm (catalog value), and the pore volume was 1.58 cm³/g, and the BET specific surface area was 2840 m²/g. The pore volume and BET specific surface area are values for pores having a pore diameter of 100 nm or smaller in porous carbon.

For the measurement of the pore volume and BET specific surface area, a specific surface area and pore distribution measuring device (Autosorb-3) manufactured by Quantacrome Instruments was used.

Argon-ion milling treatment was conducted on the composite powder A to expose the particle cross-section, and SEM-EDX analysis was conducted to confirm the impregnation of phosphorus pentasulfide into the activated carbon.

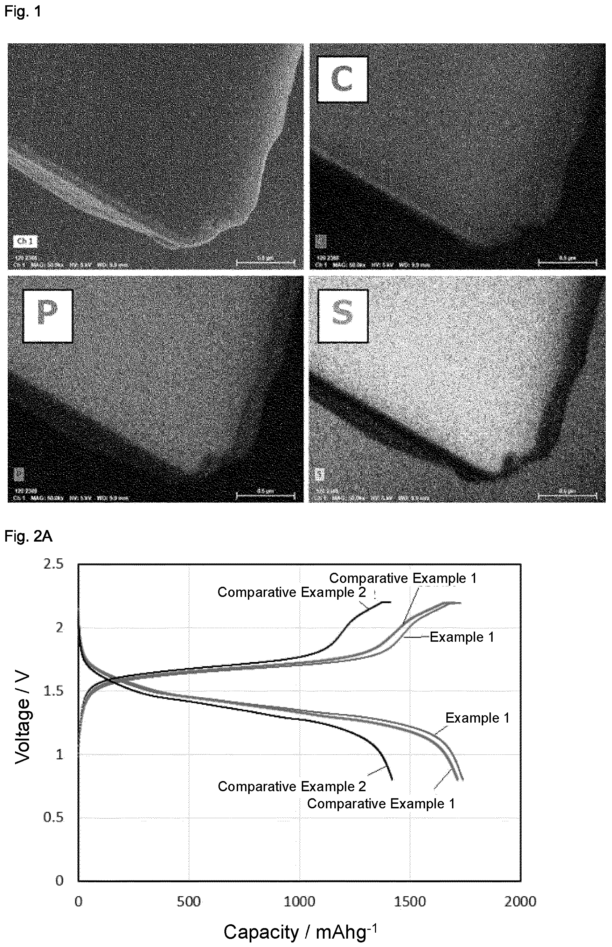

Fig. 1 is a SEM image and EDX mapping of a cross-section of the composite powder A (carbon element (C), phosphorus element (P) and sulfur element (S)). From Fig. 1, it can be confirmed that the P element and the S element are present on the cross-section of the activated carbon identified by the C element, and therefore, phosphorus pentasulfide is impregnated into the pores of the activated carbon.

### (2) Preparation of composite powder B

The composite powder A and an elemental sulfur (melting point: 115°C) with the mass ratio of 39:61 were added to a Tammann tube with the inner diameter of 12 mm, and it was added and sealed in a SUS tube container. It was heated in an electric furnace at 150°C for 6 hours and then at 300°C for 2.75 hours to obtain a composite powder B including the composite powder A and sulfur.

### [Preparation of positive electrode mixture]

### (1) Preparation of solid electrolyte

0.4127 g of lithium sulfide, 0.6655 g of phosphorus pentasulfide, 0.2137 g of lithium iodide, 0.2080 g of lithium bromide and 10 zirconia balls having the diameter of 10 mm were added to 45 mL of zirconia pot, and it was sealed. They were mixed (mechanical milling) for 40 hours at a rotational speed of 370 rpm by using a planetary ball mill apparatus (manufactured by Fritsch GmbH, model number P-7) to obtain a powder. The obtained powder was heated at 195°C for 3 hours to obtain a solid electrolyte.

### (2) Preparation of positive electrode mixture

0.51 g of the composite powder B and 0.45 g of the solid electrolyte with 10 zirconia balls having the diameter of 10 mm were added to 45 mL of zirconia pot, and it was sealed. They were mixed at room temperature for 20 hours at a rotational speed of 370 rpm by using a planetary ball mill apparatus (manufactured by Fritsch GmbH, model number P-7) to obtain a positive electrode mixture powder.

### [Production of lithium-ion battery (all-solid-state battery)]

60 mg of solid electrolyte prepared above was added to a Macor cylinder having the diameter of 10 mm, and it was molded with pressure. 5.4 mg of the positive electrode mixture powder prepared above was added on the pressure surface, and it was molded with pressure again. An indium foil and a lithium foil were added on the pressure surface opposite to the positive electrode mixture, and it was pressurized to produce an all-solid-state battery.

### Comparative Example 1

### (1) Preparation of composite powder

An activated carbon (MSC-30) and the elemental sulfur with the mass ratio of 30:70 were added to a glass tube, and it was added and sealed in a SUS tube container. It was heated in an electric furnace at 150°C for 6 hours and then at 300°C for 2.75 hours to obtain a composite powder.

### (2) Preparation of positive electrode mixture and production of lithium-ion battery

0.45 g of the composite powder described above in (1), 0.064 g of phosphorus pentasulfide and 0.45 g of the solid electrolyte prepared in Example 1 were used as a raw material powder, and a positive electrode mixture was prepared in the same manner as in Example 1. And the all-solid-state battery was produced in the same manner as in Example 1.

### Comparative Example 2

0.32 g of the elemental sulfur, 0.14 g of activated carbon (MSC-30), 0.064 g of phosphorus pentasulfide and 0.45 g of the solid electrolyte prepared in Example 1 were used as a raw material powder, and a positive electrode mixture was prepared in the same manner as in Example 1. And the all-solid-state battery was produced in the same manner as in Example 1.

### [Evaluation of battery characteristics]

A constant current charge and discharge test was conducted on the all-solid-state batteries produced in Example 1 and Comparative Examples 1 and 2. The voltage-range of the charge and discharge test was set to 0.8 to 2.2 V vs. Li-In, and current densities were set as shown in Table 1.

**Table 1**

| Cycle | Current density [mAcm⁻²] | |
|---|---|---|
| | Discharge | Charge |
| 1, 2 | 0.187 | 0.187 |
| 3 | 0.187 | 0.373 |
| 4 | 0.373 | 0.373 |
| 5 | 0.756 | 0.373 |
| 6 | 1.87 | 0.373 |
| 7 | 3.73 | 0.373 |
| 8 | 7.46 | 0.373 |
| 9 to 20 | 0.373 | 0.373 |

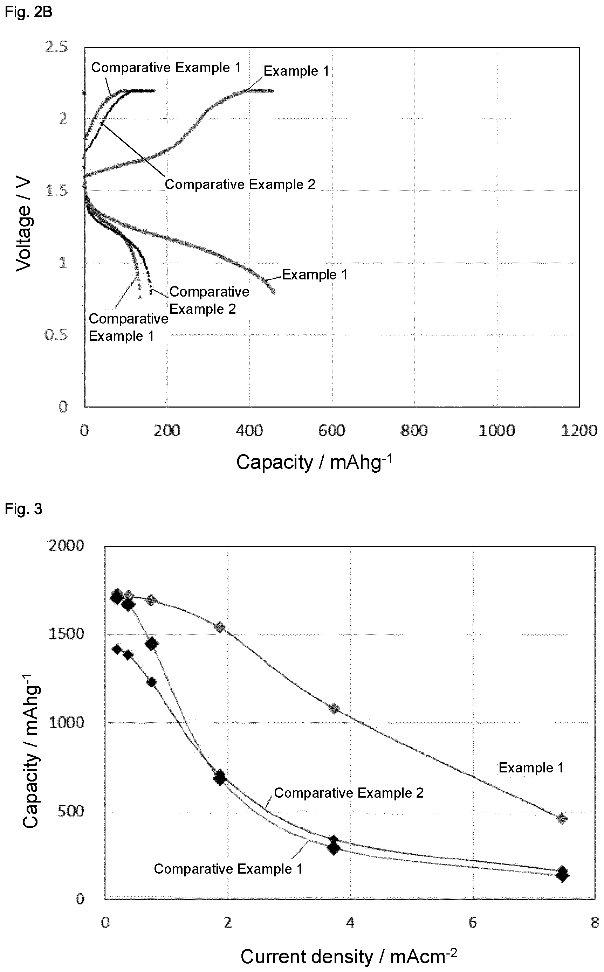

Fig. 2A shows charge and discharge curves of Example 1, and Comparative Examples 1 and 2 at the second cycle (current density at discharge: 0.187 mAcm⁻²), and Fig. 2B shows charge and discharge curves of Example 1, and Comparative Examples 1 and 2 at the eighth cycle (current density at discharge: 7.46 mAcm⁻²).

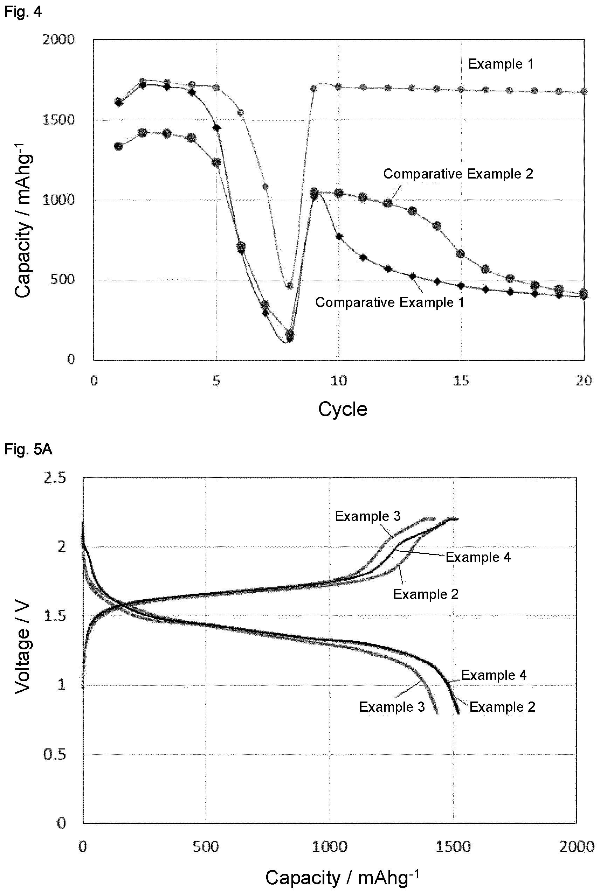

Fig. 3 is a diagram illustrating discharge capacity (rate characteristics) in a high current density, and Fig. 4 is a diagram illustrating cycle characteristics.

As can be seen from Figs. 2 to 4, when the battery characteristics of Example and Comparative Examples are compared, it can be confirmed that the battery of Example exhibits a large discharge capacity (excellent rate characteristics) at high current density and also has excellent cycle characteristics.

### Example 2

### (1) Preparation of composite powder C

A composite powder C was prepared in the same manner as in the preparation of the composite powder A of Example 1, except that the mass ratio of activated carbon (MSC-30) to phosphorus pentasulfide was 81:19.

### (2) Preparation of composite powder D

A composite powder D was prepared in the same manner as in the preparation of the composite powder B of Example 1, except that the mass ratio of the composite powder C to the elemental sulfur was 35:65.

### (3) Preparation of positive electrode mixture and production of lithium-ion battery

0.48 g of the composite powder D and 0.45 g of the solid electrolyte prepared in Example 1 were used as a raw material powder, and a positive electrode mixture was prepared in the same manner as in Example 1. An all-solid-state battery was produced in the same manner as in Example 1, except that 5.2 mg of the positive electrode mixture powder was used for the all-solid-state battery.

### Example 3

### (1) Preparation of composite powder E

A composite powder E was prepared in the same manner as in the preparation of the composite powder A of Example 1, except that the weight ratio of activated carbon (MSC-30) to phosphorus pentasulfide was 51:49.

### (2) Preparation of composite powder F

A composite powder F was prepared in the same manner as in the preparation of the composite powder B of Example 1, except that the mass ratio of the composite powder E to the elemental sulfur was 45:55.

### (3) Preparation of positive electrode mixture and production of lithium-ion battery

0.58 g of the composite powder F and 0.45 g of the solid electrolyte prepared in Example 1 were used as a raw material powder, and a positive electrode mixture was prepared in the same manner as in Example 1. An all-solid-state battery was produced in the same manner as in Example 1, except that 5.7 mg of the positive electrode mixture powder was used for the all-solid-state battery.

### Example 4

### (1) Preparation of composite powder G

An activated carbon (MSC-30) and lithium iodide (melting point: 459°C) with the mass ratio of 56:44 were added to a Tammann tube with an inner diameter of 12 mm, and it was added and sealed in a SUS tube container. It was heated in an electric furnace from room temperature to 520°C over an hour, and then it was held for 6 hours at 520°C to obtain a composite powder G.

SEM-EDX analysis was conducted on the composite powder G in the same manner as in Example 1 to confirm the state of impregnation of lithium iodide into the activated carbon.

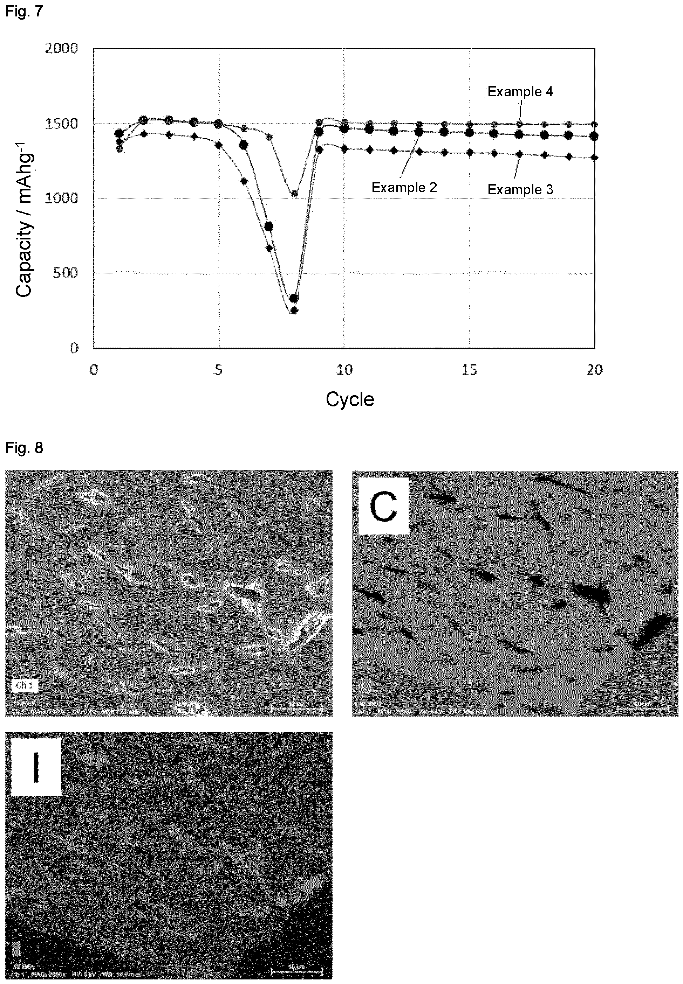

Fig. 8 is a SEM image and EDX mapping (carbon element (C) and iodine element (I)) of a cross-section of the composite powder G. From Fig. 8, it can be confirmed that the I element is present on the cross-section of the activated carbon identified by the C element, and therefore, lithium iodide is impregnated into the pores of the activated carbon.

### (2) Preparation of composite powder H

A composite powder H was prepared in the same manner as in the preparation of the composite powder B of Example 1, except that the mass ratio of the composite powder G to the elemental sulfur was 43:57.

### (3) Preparation of positive electrode mixture and production of lithium-ion battery

0.56 g of the composite powder H and 0.45 g of the solid electrolyte prepared in Example 1 were used as a raw material powder, and a positive electrode mixture was prepared in the same manner as in Example 1. An all-solid-state battery was produced in the same manner as in Example 1, except that 5.6 mg of the positive electrode mixture powder was used for the all-solid-state battery.

The all-solid-state batteries produced in Examples 2 to 4 were evaluated in the same manner as in Example 1.

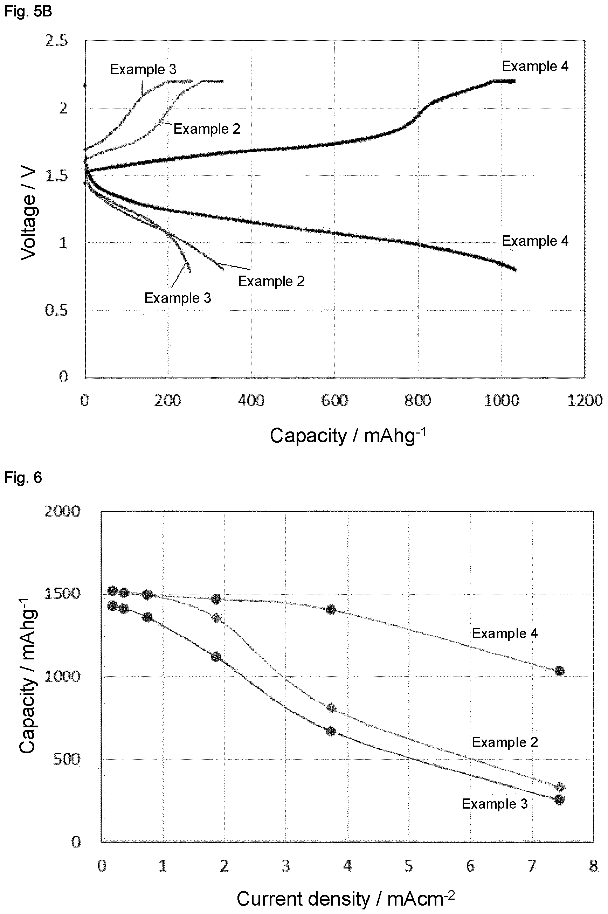

Fig. 5A shows charge and discharge curves of Examples 2 to 4 at the second cycle (current density at discharge: 0.187 mAcm⁻²), and Fig. 5B shows charge and discharge curves of Examples 2 to 4 at the eighth cycle (current density at discharge: 7.46 mAcm⁻²).

Fig. 6 is a diagram illustrating discharge capacity (rate characteristics) in a high current density, and Fig. 7 is a diagram illustrating cycle characteristics.

As can be seen from Figs. 5 to 7, it can be confirmed that they exhibit a large discharge capacity (excellent rate characteristics) at high current density and also have excellent cycle characteristics.

### Example 5

### (1) Preparation of composite powder I

A composite powder I was prepared in the same manner as in the preparation of the composite powder A of Example 1, except that antimony sulfide (melting point: 550°C) was used instead of phosphorus pentasulfide, the mass ratio of activated carbon (MSC-30) to antimony sulfide was 49:51, and the heating temperature was 580°C.

SEM-EDX analysis was conducted on the composite powder I in the same manner as in Example 1 to confirm the state of impregnation of antimony sulfide into the activated carbon.

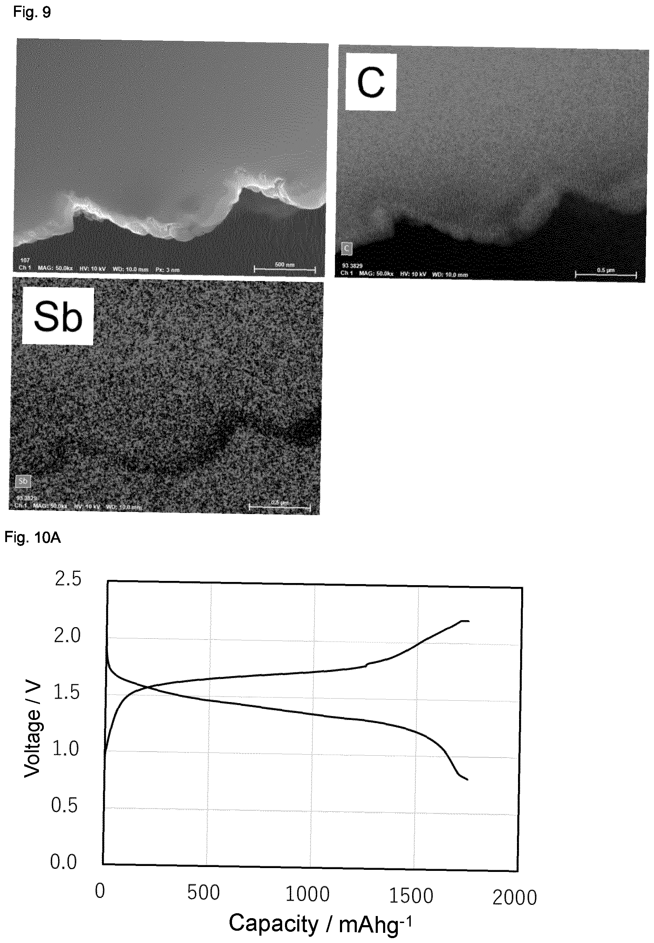

Fig. 9 is a SEM image and EDX mapping (carbon element (C) and antimony element (Sb)) of a cross-section of the composite powder I. From Fig. 9, it can be confirmed that the Sb element is present on the cross-section of the activated carbon identified by the C element, and therefore, antimony sulfide is impregnated into the pores of the activated carbon.

### (2) Preparation of composite powder J

A composite powder J was prepared in the same manner as in the preparation of the composite powder B of Example 1, except that the composite powder I was used, and the mass ratio of the composite powder I to the elemental sulfur was 47:53.

### (3) Preparation of positive electrode mixture and production of lithium-ion battery

A positive electrode mixture and an all-solid-state battery were produced in the same manner as in Example 1, except that the composite powder J was used as a raw material powder.

The all-solid-state battery produced in Example 5 was evaluated in the same manner as in Example 1.

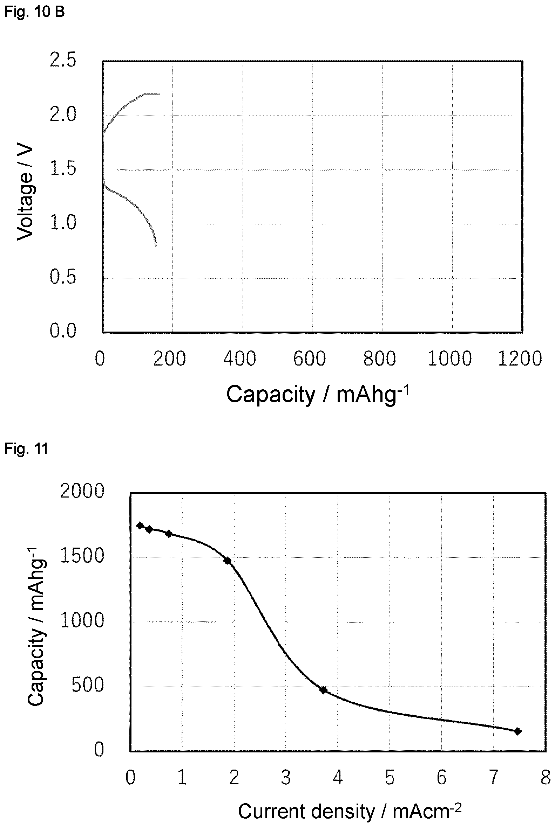

Fig. 10A shows a charge and discharge curve of Example 5 at the second cycle (current density at discharge: 0.187 mAcm⁻²), and Fig. 10B shows a charge and discharge curve of Example 5 at the eighth cycle (current density at discharge: 7.46 mAcm⁻²).

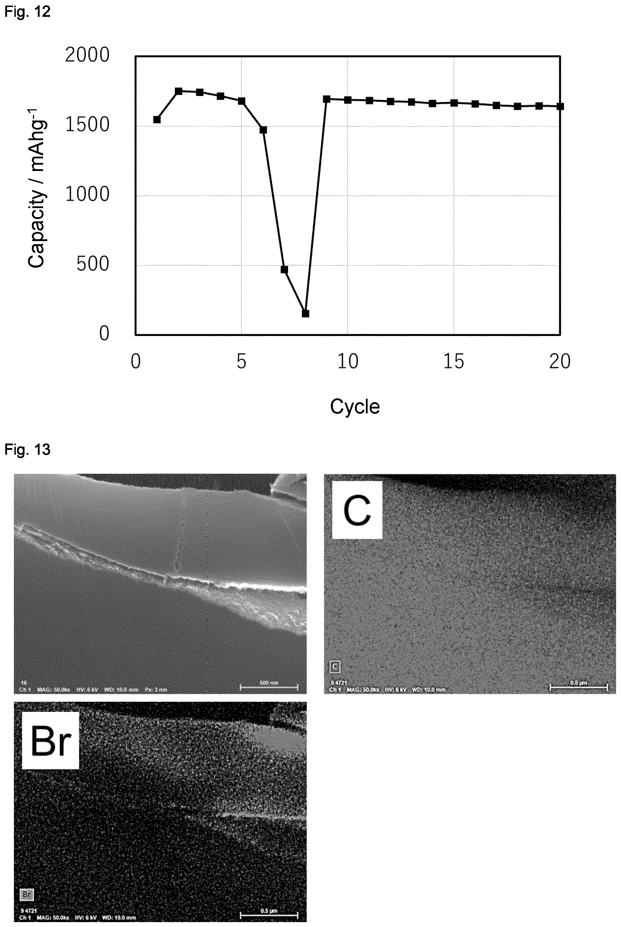

Fig. 11 is a diagram illustrating discharge capacity (rate characteristics) in a high current density, and Fig. 12 is a diagram illustrating cycle characteristics.

As can be seen from Figs. 10 to 12, it can be confirmed that it exhibits a large discharge capacity (excellent rate characteristics) at high current density and also has excellent cycle characteristics.

### Example 6

### (1) Preparation of composite powder K

A composite powder K was prepared in the same manner as in the preparation of the composite powder A of Example 1, except that lithium bromide (melting point: 547°C) was used instead of phosphorus pentasulfide, the mass ratio of activated carbon (MSC-30) to lithium bromide was 56:44, and the heating temperature was 552°C.

SEM-EDX analysis was conducted on the composite powder K in the same manner as in Example 1 to confirm the state of impregnation of lithium bromide into the activated carbon.

Fig. 13 is a SEM image and EDX mapping (carbon element (C) and bromine element (Br)) of a cross-section of the composite powder K. From Fig. 13, it can be confirmed that the Br element is present on the cross-section of the activated carbon identified by the C element, and therefore, lithium bromide is impregnated into the pores of the activated carbon.

### (2) Preparation of composite powder L

A composite powder L was prepared in the same manner as in the preparation of the composite powder B of Example 1, except that the composite powder K was used, and the mass ratio of the composite powder K to the elemental sulfur was 43:57.

SEM-EDX analysis was conducted on the composite powder L in the same manner as in Example 1 to be able to confirm impregnation of lithium bromide into the activated carbon.

### Example 7

### (1) Preparation of composite powder M

A composite powder M was prepared in the same manner as in the preparation of the composite powder A of Example 1, except that red phosphorus (melting point: 589.5°C, sublimation temperature: 416°C) was used instead of phosphorus pentasulfide, the mass ratio of activated carbon (MSC-30) to red phosphorus was 67:33, and the heating temperature was 450°C.

SEM-EDX analysis was conducted on the composite powder M in the same manner as in Example 1 to confirm the state of impregnation of phosphorus into the activated carbon.

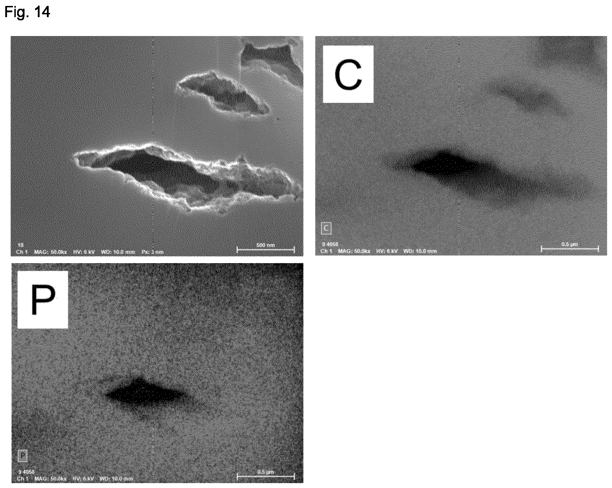

Fig. 14 is a SEM image and EDX mapping (carbon element (C) and phosphorus element (P)) of a cross-section of the composite powder M. From Fig. 14, it can be confirmed that the P element is present on the cross-section of the activated carbon identified by the C element, and therefore, phosphorus is impregnated into the pores of the activated carbon.

### (2) Preparation of composite powder N

A composite powder N was prepared in the same manner as in the preparation of the composite powder B of Example 1, except that the composite powder M was used, and the mass ratio of the composite powder M to the elemental sulfur was 39:61.

SEM-EDX analysis was conducted on the composite powder N in the same manner as in Example 1 to be able to confirm impregnation of red phosphorus into the activated carbon.

### Industrial Applicability

The composite powder of the present invention is suitable as a structural material of an alkali metal-ion battery, particularly as a positive electrode mixture. In addition, the alkali metal-ion battery of the present invention is suitably used for, for example, a battery and the like used in a personal computer, a video camera, an information-related device or a communication device such as a mobile phone, and a vehicle such as an electric vehicle.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) on the basis of which the present application claims Paris convention priority are incorporated herein by reference in its entirety.

## Claims

1. A composite powder comprising a carbon material having pores, a first heat-impregnating material and a second heat-impregnating material present in the pores,
wherein the first heat-impregnating material comprises an alkali metal ion-conductive material or precursor thereof comprising one or more elements selected from lithium, boron, oxygen, phosphorus, halogen and antimony, and
the second heat-impregnating material comprises an elemental sulfur.

2. The composite powder according to claim 1, wherein the first heat-impregnating material has a melting point of 130 to 950°C.

3. The composite powder according to claim 1 or 2, wherein the first heat-impregnating material and the second heat-impregnating material are impregnated into the pores by melting.

4. The composite powder according to any one of claims 1 to 3, wherein the first heat-impregnating material is one or more compounds selected from the group consisting of phosphorus pentasulfide, red phosphorus, boron sulfide, lithium sulfide, lithium polysulfide (Li₂Sₙ, n satisfies 1<n≦ 8), lithium halide, lithium boron hydride, lithium oxide, phosphorus pentoxide, boron oxide, trilithium phosphate and antimony sulfide.

5. The composite powder according to any one of claims 1 to 4, wherein the BET specific surface area of the carbon material is 50 m²/g or more and 6,000 m²/g or less.

6. The composite powder according to any one of claims 1 to 5, wherein the pore volume of the carbon material is 0.5 cm³/g or more and 6 cm³/g or less.

7. A positive electrode mixture comprising the composite powder according to any one of claims 1 to 6, and a solid electrolyte.

8. An alkali metal-ion battery comprising the composite powder according to any one of claims 1 to 6.

9. A method for producing a composite powder, wherein the following steps (1) and (2) are conducted simultaneously or separately:
step (1): heating a carbon material having pores, and an alkali metal ion-conductive material or a precursor thereof comprising one or more elements selected from lithium, boron, oxygen, phosphorus, halogen and antimony at a temperature equal to or higher than the melting point,
step (2): heating the carbon material and an elemental sulfur at a temperature equal to or higher than the melting point of the elemental sulfur.

10. The method for producing it according to claim 9, wherein the alkali metal ion-conductive material or precursor thereof has a melting point of 130 to 950°C.

11. The method for producing it according to claim 9 or 10, wherein the step (2) is conducted after the step (1).
